# EUROPÄISCHE PATENTANMELDUNG

(11) **EP 4 512 603 A1**
(43) Veröffentlichungstag der Anmeldung: **26.02.2025**
(21) Anmeldenummer: 24188245.5
(22) Anmeldetag: 12.07.2024
(51) Int. Cl.: B29C 65/00, B29C 65/10, B29L 22/00, C09D 5/24

(54) **SCHWEISSGERÄT**

(30) Priorität: 22.08.2023 DE 202023104764 U
(71) Anmelder: KVT Bielefeld GmbH, 33609 Bielefeld (DE)
(72) Erfinder: Grün, Michael, 33758 Schloß Holte-Stukenbrock (DE)
(74) Vertreter: Ter Meer Steinmeister & Partner

(57) **Zusammenfassung**

Schweißgerät zum Verschweißen von Kunststoffen, mit einer Wärmequelle (26, 28, 30, 32, 34) und einer Einrichtung (10) zum Übertragen der Wärme der Wärmequelle auf ein zu verschweißendes Werkstück, dadurch gekennzeichnet, dass die Wärmequelle eine Beschichtung (26, 28, 30, 32, 34) aus einer flächig auf ein Substrat aufgetragenen elektrisch leitfähigen Suspension ist, die über Kontakte (38, 40) mit einer Stromquelle (36) verbunden ist.

## Beschreibung

Die Erfindung betrifft ein Schweißgerät zum Verschweißen von Kunststoffen, mit einer Wärmequelle und einer Einrichtung zum Übertragen der Wärme der Wärmequelle auf ein zu verschweißendes Werkstück.

Aus EP 1 415 789 B1 ist ein Schweißgerät bekannt, bei dem die Wärmequelle durch elektrische Heizpatronen in einem Gaserhitzer gebildet wird. Die Einrichtung zum Übertragen der Wärme auf das Werkstück wird in diesem Fall durch Düsen gebildet, die einen Strahl des im Gaserhitzer erhitzen Gases auf die Schweißzonen des Werkstücks richten.

Bei anderen bekannten Schweißgeräten wird die Wärmequelle durch elektrische Heizschlangen eines Infrarotstrahlers gebildet, der Wärmestrahlung auf die Schweißzonen des Werkstücks richtet.

Aufgabe der Erfindung ist es, ein Schweißgerät mit einem vereinfachten Aufbau zu schaffen.

Diese Aufgabe wird erfindungsgemäß dadurch gelöst, dass die Wärmequelle eine Beschichtung aus einer flächig auf ein Substrat aufgetragenen elektrisch leitfähigen Suspension ist, die über Kontakte mit einer Stromquelle verbunden ist.

Bei dem Substrat kann es sich um irgendein Bauteil des Schweißgerätes handeln, beispielsweise um einen Teil eines Gaserhitzers, eine Schweißdüse oder ein Schweißwerkzeug, das Wärmestrahlung auf die Schweißzonen abgibt. Da die Wärmequelle einfach durch eine Beschichtung auf dem Substrat gebildet wird, kann ihre Geometrie einfach an die Geometrie der Schweißzonen angepasst werden und es entfällt der umständliche Einbau von Heizpatronen in einen Gaserhitzer oder von Heizschlangen in einen Infrarotstrahler.

Wie bei den meisten elektrischen Leitern nimmt auch bei der leitfähigen Beschichtung der elektrische Widerstand mit steigender Temperatur zu. Wenn an die Kontakte, die die Beschichtung mit der Stromquelle verbinden, eine Spannung angelegt wird, so fließt der Strom zunächst auf direktem Weg von einem Kontakt zum anderen. Da die Temperatur auf diesem Strompfad zunimmt, nimmt der Widerstand zu und der Strom weicht auf benachbarte kühlere Zonen der Beschichtung aus. Diese Zonen erwärmen sich dann ebenfalls, so dass der Strom weiter ausweicht, bis schließlich die gesamte Fläche der Beschichtung von Strom durchflossen wird und sich eine im wesentlichen gleichmäßige Temperaturverteilung einstellt.

Eine für die Zwecke der Erfindung geeignete elektrisch leitfähige Suspension wird in EP 3 943 558 A1 beschrieben. Diese Suspension enthält ein Silikatsalz sowie Partikel aus expandiertem Graphit und lässt sich in flüssiger oder pastöser Form mit verschiedenen Beschichtungstechniken wie z.B. Rollbeschichtung, Sprühbeschichtung, Pinselauftrag oder Tintenstrahldrucken auf die Substratoberfläche aufbringen. Durch geeignete Wahl der Schichtdicke und der Stromstärke können ausreichend hohe Schweißtemperaturen von Beispielsweise 1000°C oder mehr erreicht werden.

Vorteilhafte Ausgestaltungen der Erfindung sind in den Unteransprüchen angegeben.

Im folgenden wird Ausführungsbeispiel anhand der Zeichnung näher erläutert.

Es zeigen:
- Fig. 1: einen Schnitt durch ein vereinfachtes Ausführungsbeispiel eines Heißgas-Schweißgerätes gemäß der Erfindung;
- Fig. 2: ein Schaltskizze zur Illustration der Stromversorgung des Schweißgerätes nach Fig. 1; und
- Fig. 3: einen Schnitt durch eine Wabenstruktur in einem Heißgas-Schweißgerät gemäß einem anderen Ausführungsbeispiel .

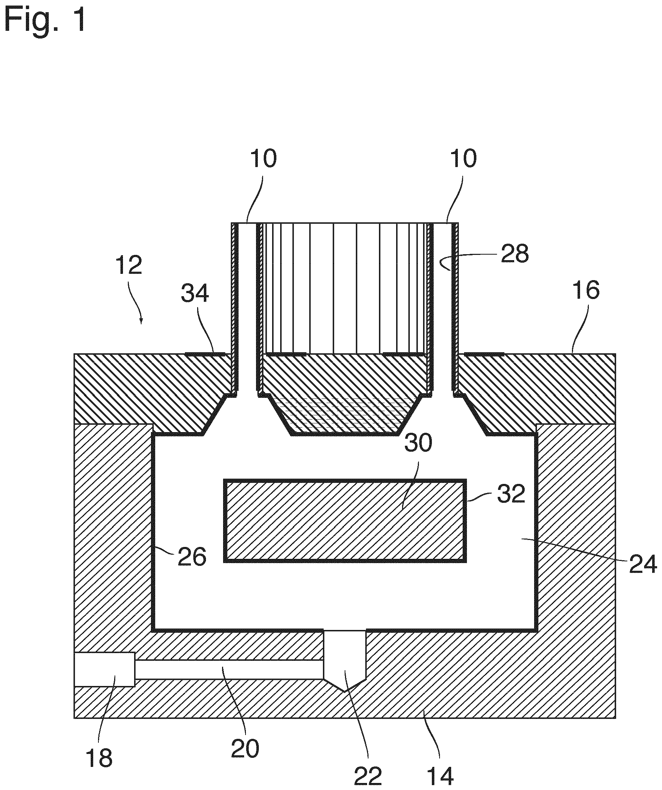

Fig. 1 zeigt einen Schnitt durch ein Heißgas-Schweißgerät. Dieses Schweißgerät weist eine Reihe von Schweißdüsen 10 sowie einen Gaserhitzer 12 auf.

Der Gaserhitzer 12 hat ein kastenförmiges Gehäuse 14 mit thermisch und elektrisch isolierenden Wänden, das an der Oberseite durch einen thermisch und elektrisch isolierenden Deckel 16 abgeschlossen ist, von dem die Schweißdüsen 10 aufragen.

Das Gehäuse 14 weist einen oder mehrere Gaseinlässe 18 auf, die jeweils über einen im Boden des Gehäuses verlaufenden Gaskanal 20 mit dem Inneren des Gehäuses verbunden sind, so dass ein Gas (z.B. Luft) über mittig im Boden des Gehäuses angeordnete Öffnungen 22 in einen Hohlraum 24 eintritt, über den es zu den Schweißdüsen 10 geleitet wird.

Im gezeigten Beispiel werden die Schweißdüsen 10 durch parallele, dicht an dicht in einer Reihe angeordneten Röhrchen gebildet, deren Wendungen eine Schweißkontur bilden, die dem gewünschten Verlauf der Schweißzone an einem nicht gezeigten Werkstück entspricht.

Die Innenwände des Hohlraums 24 weisen eine Beschichtung 26 aus einer elektrisch leitfähigen Suspension auf. Auch die Schweißdüsen 10 weisen an ihrer inneren Oberfläche jeweils eine Beschichtung 28 aus der gleichen Suspension auf. Im inneren des Hohlraums 24 ist zur Vergrößerung der Oberfläche ein Einbau 30 angeordnet, dessen Oberfläche ebenfalls eine Beschichtung 32 aus der leitfähigen Suspension aufweist. Auf der äußeren Oberfläche des Deckels 16 sind beiderseits der Reihe der Schweißdüsen 10 Beschichtungen 34 aus der leitfähigen Suspension angebracht.

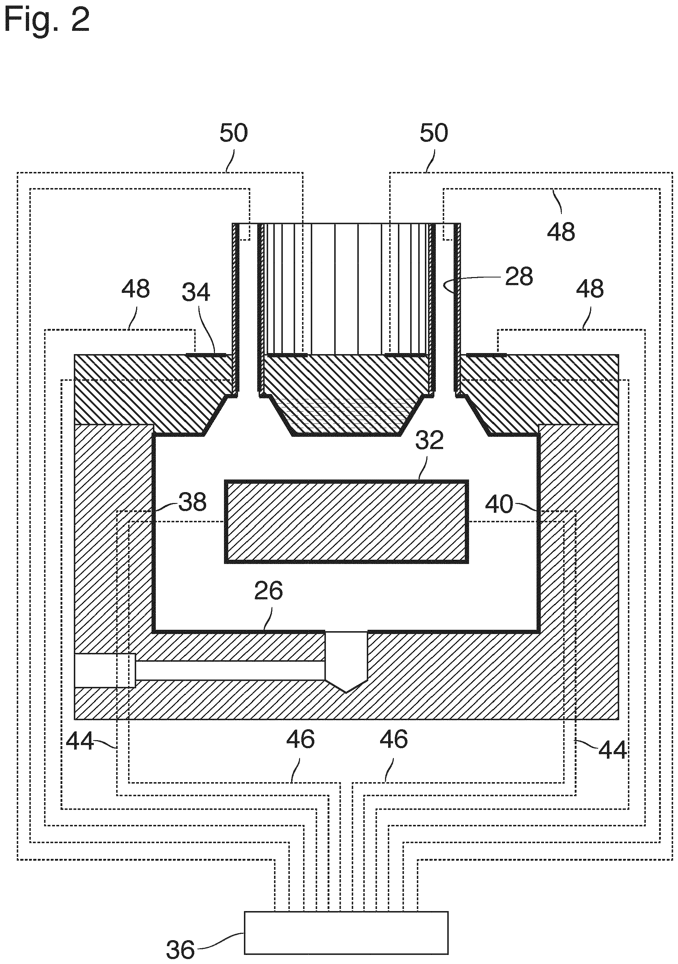

Wie schematisch in Fig. 2 gezeigt ist, sind all die in Fig. 1 gezeigten Beschichtungen jeweils über mindestens zwei Kontakte und zugehörige elektrische Leitungen mit einer Stromquelle 36 verbunden. Aus Gründen der Übersichtlichkeit sind in Fig. 2 lediglich die Kontakte der Beschichtung 26 mit Bezugszeichen 38, 40 versehen. Zugehörige elektrische Leitungen 44 bilden zusammen mit der Beschichtung 26 einen Stromkreis, in dem die Stromstärke mittels der mehrere Ausgänge aufweisenden Stromquelle 36 individuell einstellbar ist. Ein weiterer Stromkreis mit einstellbarer Stromstärke wird durch die Kontakte der Beschichtung 32 und zugehörige Leitungen 46 gebildet. Die Beschichtungen 28 der Schweißdüsen 10 und zugehörige Leitungen 48 bilden weitere unabhängige Stromkreise. Die außerhalb der Schweißkontur verlaufende Beschichtung 34 auf dem Deckel 16 bildet mit zwei an die Kontakte angeschlossenen Leitungen 48 einen weiteren Stromkreis, und schließlich wird noch ein Stromkreis durch die innerhalb der Schweißkontur verlaufende Beschichtung 34 und zugehörige Leitungen 50 gebildet.

In jedem dieser Stromkreise sind die Kontakte an den Beschichtungen so angeordnet, dass sie möglichst weit voneinander entfernt sind, so dass der Strom einen möglichst weiten Weg innerhalb der Beschichtung zurücklegen muss. Aufgrund des Temperaturgradienten des elektrischen Widerstands verteilt sich der Strom in jedem Stromkreis gleichmäßig über die gesamte Fläche der Beschichtung, so dass sich durch Regelung der Stromstärke eine im Wesentlichen einheitliche Oberflächentemperatur erreichen lässt. Das über den Gaseinlass 18 zugeführte Gas strömt an der durch die Beschichtung 26 erhitzen Innenfläche des Hohlraums 24 sowie an der durch die Beschichtung 32 erhitzten Außenfläche des Einbaus 30 entlang und wird dabei vorerwärmt. Beim durchströmen der Schweißdüsen 10 wird das Schweißgas dann durch die Beschichtungen 28 auf die endgültige Schweißtemperatur erhitzt. Die Beschichtungen 34 auf der Oberfläche des Deckels 16 bilden Wärmestrahler, mit denen zusätzlich Wärme in die Schweißzonen der Werkstücke eingestrahlt werden kann.

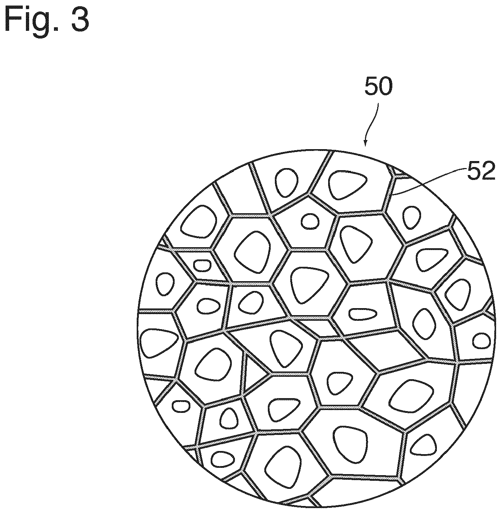

Der Hohlraum 24 kann anstelle des Einbaus 30 auch eine offenzellige Wabenstruktur 50 enthalten, wie sie in einem Vergrößerten Ausschnitt in Fig. 3 gezeigt ist. Ein Heißgas-Schweißgerät mit solchen Wabenstrukturen wird in DE 20 2021104 222 U1 beschrieben. Die Wabenstruktur 50 kann beispielsweise im Tintenstrahl-Druckverfahren in jeder gewünschten Gestalt hergestellt werden. Anschließend wird die leitfähige Beschichtungssuspension durch die Wabenstruktur geleitet (oder die Wabenstruktur wird in die Suspension eingetaucht), so dass auf den Zellwänden der Waben eine leitfähige Beschichtung 52 zurückbleibt. Die Wabenstruktur wird dann in den Hohlraum 24 eingesetzt und elektrisch kontaktiert. Da die Wabenstruktur den gesamten Strömungsquerschnitt des Hohlraums 24 (oder wahlweise irgendeines anderen Teils des Gaszuführsystems) ausfüllt, wird das durchströmende Gas wirksam erhitzt.

## Patentansprüche

1. Schweißgerät zum Verschweißen von Kunststoffen, mit einer Wärmequelle (26, 28, 30, 32, 34) und einer Einrichtung (10) zum Übertragen der Wärme der Wärmequelle auf ein zu verschweißendes Werkstück, **dadurch gekennzeichnet, dass** die Wärmequelle eine Beschichtung (26, 28, 30, 32, 34) aus einer flächig auf ein Substrat aufgetragenen elektrisch leitfähigen Suspension ist, die über Kontakte (38, 40) mit einer Stromquelle (36) verbunden ist.

2. Schweißgerät nach Anspruch 1, bei dem die Einrichtung zum Übertragen der Wärme eine Schweißdüse (10) aufweist.

3. Schweißgerät nach Anspruch 2, bei dem die Wärmequelle eine Beschichtung (26) aufweist, die an der Innenfläche eines Hohlraums (24) eines Gaserhitzers (12) angebracht ist, der mit der Schweißdüse (10) verbunden ist.

4. Schweißgerät nach Anspruch 2 oder 3, bei dem die Wärmequelle eine Beschichtung (32) aufweist, die auf der Oberfläche eines in dem Hohlraum (24) angeordneten Einbaus (30) angebracht ist.

5. Schweißgerät nach einem der Ansprüche 2 bis 4, bei dem die Wärmequelle eine Beschichtung (28) aufweist, die an der Innenfläche der Schweißdüse (10) angebracht ist.

6. Schweißgerät nach einem der Ansprüche 2 bis 5, bei dem die Wärmequelle eine Beschichtung (52) auf einer offenzelligen Wabenstruktur (50) aufweist, die von dem zur Mündung der Schweißdüse (10) strömenden Gas durchströmt wird.

7. Schweißgerät nach einem der vorstehenden Ansprüche, bei dem die Wärmequelle eine Beschichtung (34) auf einem Substrat (16) aufweist, das so geformt und angeordnet ist, dass Wärmestrahlung auf das zu verschweißende Werkstück abgegeben wird.
